# EUROPÄISCHE PATENTSCHRIFT

(11) **EP 2 367 864 B1**
(45) Veröffentlichungstag und Bekanntmachung des Hinweises auf die Patenterteilung: **03.10.2012**
(21) Anmeldenummer: 09748737.5
(22) Anmeldetag: 22.10.2009
(51) Int. Cl.: C08G 18/81

(54) **MONOMERARME 1 : 1 MONOADDUKTE AUS REAKTIVEN OLEFINISCHEN VERBINDUNGEN UND DIISOCYANATEN UNTER VERWENDUNG EINBAUBARER INHIBITOREN**
LOW MONOMER 1 : 1 MONOADDUCTS OF REACTIVE OLEFINIC COMPOUNDS AND DIISOCYANATES USING INSERTABLE INHIBITORS
MONO-ADDUITS 1:1 PAUVRES EN MONOMÈRES ET FORMÉS DE DIISOCYANATES ET DE COMPOSÉS OLÉFINIQUES RÉACTIFS, EN UTILISANT DES INHIBITEURS INCORPORABLES

(30) Priorität: 22.12.2008 DE 102008055078; 25.08.2009 DE 102009028862
(43) Veröffentlichungstag der Anmeldung: 28.09.2011
(73) Patentinhaber: Evonik Degussa GmbH, 45128 Essen (DE)
(72) Erfinder: SPYROU, Emmanouil, 46514 Schermbeck (DE); KOHLSTRUK, Stephan, 48249 Dülmen (DE); GOLLAN, Elke, Herne 44653 (DE); HENSCHKE, Andrea, 48249 Dülmen (DE); FRESMANN, Nicole, 45721 Haltern am See (DE)
(86) Internationale Anmeldenummer: PCT/EP2009/063851
(87) Internationale Veröffentlichungsnummer: WO 2010/072439

(56) Entgegenhaltungen:
- EP-A- 1 110 946
- EP-A- 1 179 555
- DE-A1- 4 305 422
- US-A- 6 107 361
- ANTONUCCI J.M. ET AL.: "Isocyanato Urethane Methacrylates Derived from Hydroxyethyl Methacrylate" J. DENT. RES., Bd. 59, Nr. 1, 1980, Seiten 35-43, XP002562607
- LEE W.-F. ET AL.: "Synthesis and Characterization of Novel Sulfobetaines Derived from 2,4-Tolylene Diisocyanate" J. APPL. POLYM. SCI., Bd. 82, 2001, Seiten 3447-3459, XP002562584

## Beschreibung

Diese Erfindung betrifft monomerarme 1 : 1 Monoaddukte aus reaktiven olefinischen Verbindungen und Diisocyanaten, die Herstellung und die Verwendung.

Die Monoaddukte aus reaktiven olefinischen Verbindungen und Diisocyanaten sind aufgrund der ihnen innewohnenden Heterofunktionalität wertvolle, vielseitig einsetzbare Synthesebausteine. Anwendungsfelder liegen z. B. im Bereich der Darstellung urethangruppenhaltiger, acrylfunktionalisierter Derivate durch Reaktion der Isocyanatgruppe mit monofunktionellen Reagenzien oder der Herstellung entsprechender acrylfunktionalisierter, UV-härtbarer Harze durch Umsetzung der Isocyanatgruppe mit polyfunktionellen Reaktionspartnern. Möglich ist auch die Darstellung von Polyisocyanaten durch z. B. radikalisch initiierte Homo- oder Copolymerisation der (Meth)Acrylgruppe. Die Reaktionsfreudigkeit der NCO-Gruppen solcher Polymerisate ermöglicht leicht und unter milden Bedingungen den Zugang zu maßgeschneiderten Polymeren mit einzigartigem Eigenschaftsprofil.

Der Einsatz von Isocyanaten mit olefinischen Doppelbindungen ist in der Patentliteratur schon häufig beschrieben worden, z. B. zur Herstellung von Vernetzern (DE 35 01 493) und selbstvernetzenden Systemen (US 4,861,853), auch auf Wasserbasis (EP 0 519 513).

Addukte aus Diisocyanaten und reaktiven olefinischen Verbindungen werden klassisch durch Umsetzung der Edukte im Molverhältnis 1 : 1 (NCO/OH = 2 : 1) erhalten. Bei diesem Verfahren entsteht als Produkt zwangsläufig eine Mischung aus heterofunktionellem Monoaddukt, Bisaddukt (1 : 2-Addukt) und Restmonomer im Verhältnis von etwa 1 : 1 : 1. Durch Einsatz eines Diisocyanatüberschusses lässt sich der Bisadduktgehalt der Mischung zurückdrängen. Dafür steigt der Anteil an Restmonomer. Bei Einsatz eines Überschusses an Hydroxyalkyl(meth)acrylat stellt sich der inverse Effekt ein. Die Bisaddukte erfüllen als Diacrylate im Gegensatz zum entsprechenden Monoaddukt nicht mehr das erwünschte Kriterium der Heterofunktionalität. Sie mindern die Qualität des Monoadduktes und bleiben auch nicht ohne Auswirkung auf die Qualität und das Eigenschaftsbild der angestrebten Endprodukte. Die gleichen Überlegungen treffen auch für das im Addukt verbleibende, überschüssige Ausgangsdiisocyanat zu. Darüber hinaus sind Diisocyanate sehr reaktionsfähige Verbindungen. Vertreter dieser Substanzklasse sind aus diesem Grunde als toxisch einzustufen und entsprechend chemikalienrechtlich zu kennzeichnen. Ein hoher Restgehalt an monomerem Diisocyanat im Produkt sollte daher grundsätzlich vermieden werden.

Die destillative Abtrennung des Restmonomergehaltes gilt allgemein als schwierig, da es durch die Temperaturbelastung der Mischung zu einer unerwünschten Polymerisation (Gelierung) der reaktiven olefinischen Doppelbindungen kommt.

Die EP 1 179 555 beschreibt die Herstellung von solchen monomerarmen Addukten aus Hydroxyalkyl(meth)acrylaten und Diisocyanaten durch Abtrennung des monomeren Diisocyanates mit Hilfe einer Kurzwegdestillation unter Einsatz von speziellen Katalysatormischungen und Bedingungen. Dies ist zwar technisch möglich, funktioniert aber nur bei sehr genauer Einhaltung der Versuchsbedingungen. Bereits bei leichten Abweichungen in der Destillationstemperatur, dem Druck, dem Inhibitorgasstrom, dem NCO/OH Verhältnis oder dem Wandmaterial besteht die Gefahr, dass das Produkt innerhalb der Kurzwegdestillationskolonne polymerisiert und damit unbrauchbar wird und zusätzlich ein beträchtlicher Reinigungsaufwand notwendig wird.

Aufgabe war es daher neue 1 : 1 Monoaddukte und ein Verfahren zu ihrer Herstellung zufinden, welches die bisherigen im Stand der Technik bekannten Nachteile nicht beinhaltet,wie z. B. die Anfälligkeit für Vergelung, sowohl auf der Destillationskolonne, als auch im Rückstand selbst, und insbesondere mit deutlich geringerer Fehleranfälligkeit monomerarme Addukte aus reaktiven olefinischen Verbindungen und Diisocyanaten zugänglich macht.

Überraschend wurde gefunden, dass neue monomerarme 1 : 1 Monoaddukte aus reaktiven olefinischen Verbindungen und Diisocyanaten dann besonders einfach und sicher durch Destillation herstellbar sind, wenn dabei einbaubare Polymerisationsinhibitoren zugegen sind.

Gegenstand der Erfindung sind monomerarme 1 : 1 Monoaddukte mit einem Gehalt an freiem Diisocyanat von unter 5 Gew.-%, bevorzugt unter 1,0 Gew.-%, erhalten aus den Ausgangsverbindungen
A) mindestens einem aliphatischen, cycloaliphatischen und/oder araliphatischen Diisocyanat in einer Menge von 1 - 20 mol,
   und
B) 1 mol mindestens einer reaktiven olefinischen Verbindung mit einer OH-Gruppe, wobei das nicht umgesetzte Diisocyanat durch eine Kurzwegdestillation vom Reaktionsprodukt abgetrennt wird,
   dadurch gekennzeichnet,
   dass die Kurzwegdestillation in Gegenwart
C) mindestens eines Inhibitors, welcher über mindestens eine gegenüber NCO-Gruppen reaktive funktionelle Gruppe verfügt, erfolgt, wobei die Menge des Inhibitors, bezogen auf das Gewicht aus der Summe von einem Mol Diisocyanat A) und einem Mol einer reaktiven olefinischen Verbindung B), (entspricht einem NCO/OH von 2:1), zwischen 0,1 - 3 Gew.-% beträgt,
   und wobei der Inhibitor vor oder nach der Umsetzung von A) mit B) zugegeben werden kann und der Inhibitor
   1. in freier Form vorliegt,
      und/oder
   2. an der Komponente A) angebunden vorliegt
      und/oder
   3. an dem Reaktionsprodukt von A) mit B) angebunden vorliegt,
   und wobei während des Destillationsprozesses oder des gesamten Prozesses mindestens ein Inhibitorgas durch die Apparaturen geleitet wird.

Gegenstand der Erfindung ist auch ein Verfahren zur Herstellung monomerarmer 1 : 1 Monoaddukte mit einem Gehalt an freiem Diisocyanat von unter 5 Gew.-%, bevorzugt unter 1,0 Gew.-%, aus den Ausgangsverbindungen
A) mindestens einem aliphatischen, cycloaliphatischen und/oder araliphatischen Diisocyanat in einer Menge von 1 - 20 mol,
   und
B) 1 mol mindestens einer reaktiven olefinischen Verbindung mit mindestens einer OH-Gruppe,
   erhalten durch Umsetzung in einem Temperaturbereich von 40 - 120 °C und wobei anschließend das nicht umgesetzte Diisocyanat durch eine Kurzwegdestillation bei 80 - 220 °C/0,1 - 10 mbar vom Reaktionsprodukt abgetrennt wird,
   dadurch gekennzeichnet,
   dass die Kurzwegdestillation in Gegenwart
C) mindestens eines Inhibitors, welcher über mindestens eine gegenüber NCO-Gruppen reaktive funktionelle Gruppe verfügt, erfolgt, wobei die Menge des Inhibitors zwischen 0,1 - 3 Gew.-% beträgt, bezogen auf das Gewicht aus der Summe von einem Mol Diisocyanat A) und einem Mol einer reaktiven olefinischen Verbindung B), entspricht einem Verhältnis NCO/OH von 2 : 1,
   wobei der Inhibitor vor oder während oder nach der Umsetzung von A) mit B) zugegeben wird,
und wobei während des Destillationsprozesses oder des gesamten Prozesses mindestens ein Inhibitorgas durch die Apparaturen geleitet wird.

Die monomerarmen 1 : 1 Monoaddukte aus Diisocyanaten A) und reaktiven olefinischen Verbindungen B) mit einem Gehalt an freiem Diisocyanat von unter 5 Gew.-%, bevorzugt unter 1,0 Gew.-%, werden prinzipiell erhalten durch Umsetzung von 1 - 20, bevorzugt 1 - 4,9 mol, besonders bevorzugt 1,5 - 4 mol Diisocyanat A), mit 1 mol einer reaktiven olefinischen Verbindung B) in einem Temperaturbereich von 40 - 120 °C, bevorzugt 40 - 80 °C, wobei die Reaktion bis zum vollständigen Umsatz der reaktiven olefinischen Verbindung B) durchgeführt wird und anschließend das nicht umgesetzte Diisocyanat durch eine Kurzwegdestillation bei 80 - 220 °C und einem Druck von 0,1 - 10 mbar vom Reaktionsprodukt abgetrennt wird. Die speziellen Inhibitoren C), die entweder vor, während oder nach der Reaktion zugegeben werden, zeichnen sich dadurch aus, dass sie chemisch reaktiv gegenüber NCO-Gruppen sind und damit eingebaut werden können. Die Verwendung eines Inhibitorgases ausgewählt aus Luft, Stickstoffmonoxid, Sauerstoff allein oder in Mischungen, oder Mischungen, die neben Luft, Sauerstoff oder Stickstoffmonoxid einen zusätzlichen Anteil von 1 - 90 Vol-% an Kohlendioxid, Stickstoff oder Edelgasen oder Mischungen dieser Gase enthält, die während des Destillationsprozesses oder des gesamten Prozesses als Inhibitorgas durch die Apparatur geleitet werden, hat sich dabei als vorteilhaft erwiesen. Dabei ist es besonders vorteilhaft, den Inhibitorgasstrom durch alle Destillationsapparaturteile zu leiten, die in Kontakt mit dem Produkt kommen können.

Falls die Reaktion in einem Lösemittel durchgeführt wird, wird dieses Lösemittel vor der Abtrennung des Restmonomergehaltes entfernt. Die Entfernung des überschüssigen Diisocyanates erfolgt destillativ in Kurzwegverdampfern, vorzugsweise unter Verwendung von Dünnschichtverdampfern, oder Fallfilmverdampfern. Die Destillation wird bei 80 - 220 °C, bevorzugt bei 130 - 200 °C und einem Druck von 0,1 - 10 mbar, bevorzugt 0,5 bis 5 mbar, durchgeführt in Gegenwart eines Inhibitorgases. Die Temperatur und der Unterdruck richten sich nach dem Viskositätsverhalten der jeweiligen Produkte und sind zudem eine Funktion des optimalen Gaszustroms. Bei dem Kurzwegverdampfer kann es sich z.B. um eine Glas- oder auch Metallapparatur handeln. Die so erhaltenen monomerarmen 1 : 1 Monoaddukte haben einen Gehalt an monomeren Diisocyanaten von < 1 Gew.-%, bevorzugt < 0,7 %, besonders bevorzugt < 0,5 %. Naturgemäß kommt es hier auch zu einer geringfügigen Bildung von Diaddukten aus Diisocyanat und olefinischer Verbindung. Diese Diaddukte sind umso stärker vertreten, je geringer der Überschuss an Diisocyanat ist und je geringer die Selektivität, d. h. der Reaktivitätsunterschied bei den Isocyanatgruppen ist (Vgl. Farbe und Lack, 2000, Vol 11, S. 126-130). Der Gehalt an diesen Diaddukten schwankt zwischen 0,1 und 15 Gew.-% im Endprodukt, bevorzugt bei 0,1 - 5 % besonders bevorzugt bei 0,1 -1 %.

Die Charakterisierung der erfindungsgemäßen monomerarmen 1 : 1 Monoaddukte erfolgt über das Herstellverfahren, Product by Process.

Erfindungswesentlich ist, dass der Inhibitor C) über funktionelle Gruppen verfügt, die mit den NCO-Gruppen des Diisocyanates A) reagieren können und die funktionelle Gruppe des Inhibitors C) an einem aliphatischen oder cycloaliphatischen Kohlenwasserstoffrest gebunden ist und nicht allein an einem aromatischen Kohlenwasserstoffrest, wie beispielsweise bei Inhibitoren, wie sie in EP 1 179 555 beschrieben sind.

Weiterhin erfindungswesentlich ist, dass der Inhibitor C) während der Kurzwegdestillation anwesend ist. Der Inhibitor C) kann, wie oben beschrieben, dabei in freier Form vorliegen. Des Weiteren kann der Inhibitor - vor der Umsetzung von A) mit B) - mit dem Diisocyanat A) umgesetzt werden. Ebenfalls ist es möglich, den Inhibitor vor oder während oder nach der Umsetzung von A) mit B) zuzugeben. Daraus resultiert, dass der Inhibitor C) prinzipiell vor oder während der Kurzwegdestillation zugegeben werden kann. Für die erfindungsgemäßen monomerarmen 1 : 1 Monoaddukte bedeutet das, dass der Inhibitor C) in diesen
1. teilweise in freier Form vorliegt,
   und/oder
2. an der Komponente A) angebunden vorliegt
   und/oder
3. an dem Reaktionsprodukt von A) mit B) angebunden vorliegt.

Teilweise bedeutet dabei, dass 0,1 - 99 Gew.-% des Inhibitors in freier Form vorliegt.

Als Isocyanate eignen sich aliphatische, cycloaliphatische und araliphatische, d. h. arylsubstituierte aliphatische Diisocyanate, wie sie beispielsweise im Houben-Weyl, Methoden der organischen Chemie, Band 14/2, Seiten 61 - 70 und im Artikel von W. Siefken, Justus Liebigs Annalen der Chemie 562, 75 - 136, beschrieben werden, wie 1,2-Ethylendiisocyanat, 1,4-Tetramethylendiisocyanat, 1,6-Hexamethylendiisocyanat (HDI), 2,2,4-Trimethyl-1,6-hexamethylendiisocyanat (TMDI), 2,4,4-Trimethyl-1,6-hexamethylendiisocyanat (TMDI)1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-düsocyanat, Cyclohexan-1,3-düsocyanat, Cyclohexan-1,4-diisocyanat, 3-Isocyanatomethyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methanol-naphthalin-2,5-ylendimethylendiisocyanat, , Decahydro-8-methyl-(1,4-methanol-naphthalin-3,5-ylendimethylendiisocyanat, Hexahydro-4,7-methano-indan-1,5-ylendimethylendiisocyanat, Hexahydro-4,7-methano-indan-2,5-ylendimethylendiisocyanat, Hexahydro-4,7-methano-indan-1,6-ylendimethylendiisocyanat, Hexahydro-4,7-methano-indan-2,5-ylendimethylendiisocyanat, Hexahydro-4,7-methanoindan-1,5-ylendiisocyanat, Hexahydro-4,7-methanoindan-2,5-ylendiisocyanat, Hexahydro-4,7-methanoindan-1,6-ylendiisocyanat, Hexahydro-4,7-methanoindan-2,6-ylendiisocyanat, 2,4-Hexahydrotoluylendiisocyanat, 2,6-Hexahydrotoluylendiisocyanat, 4,4'-Methylendicyclohexyldiisocyanat (4,4'-H₁₂MDI), 2,2'-Methylendicyclohexyldiisocyanat (2,2'-H₁₂MDI), 2,4-Methylendicyclohexyldiisocyanat (2,4-H₁₂MDI) oder auch Mischungen, 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzol, 1,4-Diisocyanatomethyl-2,3,5,6-tetramethylbenzol, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan sowie beliebige Gemische dieser Verbindungen. Weitere geeignete Isocyanate werden in dem genannten Artikel in den Annalen auf Seite 122 f. beschrieben. Auch 2,5-Bis(isocyanatomethyl)bicyclo[2.2.1]heptan (NBDI)und/oder (2,6)-Bis(isocyanatomethyl)bicyclo[2.2.1]heptan (NBDI) ist in Reinsubstanz oder als Mischkomponente geeignet. Die Herstellung dieser Diisocyanate wird heutzutage in der Regel entweder über die Phosgenroute oder über das Harnstoffverfahren durchgeführt. Die Produkte beider Methoden sind gleichermaßen für die Verwendung im erfindungsgemäßen Verfahren geeignet. Besonders bevorzugt werden in der Regel die technisch leicht zugänglichen aliphatischen und cycloaliphatischen Diisocyanate, wie z. B. IPDI, HDI und H₁₂MDI, sowie deren Isomerengemische, eingesetzt.

Geeignete reaktive olefinische Verbindungen sind alle Verbindungen, die sowohl mindestens eine Methacrylat- oder Acrylatfunktion oder Vinylethergruppe tragen, als auch genau eine Hydroxylgruppe. Weitere Bestandteile können aliphatische, cycloaliphatische, aromatische oder heterocyclische Alkylgruppen sein. Auch Oligomere oder Polymere sind denkbar.
Bevorzugt werden leicht zugängliche Produkte wie z. B. Hydroxyethylacrylat, Hydroxypropylacrylat, Hydroxybutylacrylat und Hydroxyethylmethacrylat, Hydroxypropylmethacrylat, Hydroxybutylmethacrylat, Glycerindiacrylat, Pentaerythroltriacrylat, Trimethylolpropandiacrylat, Glycerindimethacrylat, Pentaerythroltrimethacrylat und Trimethylolpropandimethacrylat sowie Hydroxyethylvinylether, Hydroxypropylvinylether, Hydroxybutylvinylether Hydroxypentylvinylether und Hydroxyhexylvinylether. Besonders bevorzugt wird Hydroxyethylacrylat. Auch Mischungen können selbstverständlich eingesetzt werden.

Die Umsetzung von Polyisocyanaten mit reaktiven olefinischen Verbindungen beinhaltet die Reaktion der freien NCO-Gruppen mit Hydroxylgruppen und wurde schon häufig beschrieben (EP 0 669 353, EP 0 669 354, DE 30 30 572, EP 0 639 598 oder EP 0 803 524). Diese Reaktion kann entweder mit aber auch ohne Lösemittel stattfinden. Sie wird in der Regel in einem Temperaturbereich zwischen 40 und 80 °C durchgeführt und lässt sich vorteilhaft durch gängige in der Urethanchemie bekannte Katalysatoren, wie z. B. metallorganische Verbindungen, wie z. B. Dibutylzinndilaurat (DBTL), Dibutylzinndineodecanoat, Zinkoctoat, oder Bismuthneodecanoat; aber auch tertiäre Amine, z. B. Triethylamin oder Diazabicyclooctan usw., katalysieren. Als Reaktionsaggregate eignen sich alle üblichen Apparaturen, Kessel, Statik-Mischer, Extruder usw., vorzugsweise Aggregate, die über eine Misch- oder Rührfunktion verfügen. Das NCO/OH Verhältnis beträgt 2 : 1 bis 40 : 1 bevorzugt 2 : 1 bis 9,8 : 1 und besonders bevorzugt 3:1 bis 8:1. Dies entspricht einer Umsetzung von 1 - 20 mol, bevorzugt 1 - 4,9 mol, besonders bevorzugt 1,5 - 4 mol Diisocyanat A), mit 1 mol einer reaktiven olefinischen Verbindung B).

Einbaubare Inhibitoren C) verfügen über nicht aromatische gegenüber NCO reaktive funktionelle Gruppen, bevorzugt Hydroxy-, Thiol- oder Amingruppen, die mit Isocyanaten kovalente Bindungen eingehen können. An aromatische Gruppen gebundene reaktive funktionelle Gruppen dieser Art reagieren zwar auch mit NCO-Gruppen, werden aber bei den Destillationsbedingungen in der Regel wieder abgespalten und sind daher nicht für den Einbau geeignet. In Frage kommen also alle Verbindungen, die handelsüblich als Polymerisationsinhibitoren eingesetzt werden (siehe folgendes Kapitel), aber darüber hinaus noch über nicht aromatische gegenüber Isocyanaten reaktive Gruppen, bevorzugt Hydroxy-, Thiol- oder Amingruppen, verfügen. Bevorzugt sind die reaktiven funktionellen Gruppen an einem aliphatischen oder cycloaliphatischen Kohlenwasserstoffrest gebunden. Solche Verbindungen werden beispielsweise beschrieben in US 4,260,832 und GB 226 47 08. In Frage kommen z. B. 3,5-Di-tert-butyl-4-hydroxybenzylalkohol, 3-(3,5-Di-tert-butyl-4-hydroxyphenyl)propanol, 4-(3,5-Di-tert-butyl-4-hydroxyphenyl)butanol, 5-(3,5-Di-tert-butyl-4-hydroxyphenyl)pentanol, 6-(3,5-Di-tert-butyl-4-hydroxyphenyl)hexanol, 3-tert-butyl-5-methyl-4-hydroxybenzylalkohol, 3-(3,5-Di-tert-butyl-4-hydroxyphenyl)propanol, 4-(3-tert-butyl-5-methyl-4-hydroxyphenyl)butanol, 5-(3-tert-butyl-5-methyl-4-hydroxyphenyl)pentanol, 6-(3-tert-butyl-5-methyl-4-hydroxyphenyl)hexanol, 4-(3,5-Dimethyl-4-hydroxyphenyl)butanol, 5-(3,5-Dimethyl-4-hydroxyphenyl)pentanol, 6-(3,5-Dimethyl-4-hydroxyphenyl)hexanol allein oder in Mischungen. Bevorzugt wird 3,5-Di-tert-butyl-4-hydroxybenzylalkohol eingesetzt. Die Menge des einbaubaren Inhibitors bezogen auf das Gewicht aus der Summe von einem Mol Diisocyanat und einem Mol einer reaktiven olefinischen Verbindung mit einer reaktiven Gruppe (NCO/reaktive Gruppe = 2:1) beträgt zwischen 0,1 - 3 Gew.-%, bevorzugt 0,1 - 2 Gew.-% besonders bevorzugt 0,1 - 1 Gew.-%.

Die Anwesenheit von weiteren handelsüblichen Polymerisationsinhibitoren (Antioxidantien) ist vorteilhaft. Als Antioxidantien eignen sich beispielsweise Brenzcatechin, 4-Methoxyphenol, 4-tert.-Butyloxyphenol, 4-Benzyloxyphenol, α-Naphthol, β-Naphthol, Phenothiazin, 10-10-Dimethyl-9,10-dihydroacridin, Bis-[2-hydroxy-5-methyl-3-cyclohexytphenyl]-methan, Bis-[2-hydroxy-5-methyl-3-tert.-butylphenyl]-methan, Hydrochinon, Pyrogallol, 3,4-Dihydroxy-1-tert.-butylbenzol, 4-Methoxy-2(bzw. 3)-tert.-butylphenol (BHA), BHA auch in Kombination mit Bis-[2-carboxyethyl]-sulfid (TDPA), 4-Methyl-2,6-di-tert.-butylphenol (BHT), Bis-[4-hydroxy-2-methyl-5-tert.-butylphenyl]-sulfid, 4-Butylmercaptomethyl-2,6-di-tert.-butylphenol, 4-Hydroxy-3,5-di-tert.-butylphenylmethansulfonsäure-dioctadecylester, 2,5-Dihydroxy-1-tert.-butylbenzol, 2,5-Dihydroxy-1,4-di-tert.-butylbenzol, 3,4-Dihydroxy-1-tert.-butylbenzol und 2,3-Dimethyl-1,4-bis-[3,4-dihydroxyphenyl]-butan sowie Mischungen dieser Inhibitoren. Bevorzugt werden Phenothiazin eingesetzt und BHT eingesetzt.

Die phenolischen Antioxidantien können auch mit Phosphorigsäureestern gemäß der unteren Formel kombiniert werden, wobei X Sauerstoff oder Schwefel ist, und wobei R¹, R² und R³ gleiche oder verschiedene Alkyl-, Alkylen-(1)-yl-, Aryl- oder Aralkylreste mit jeweils 1 - 20 C-Atomen repräsentieren.

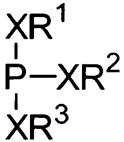

Die phenolischen Antioxidantien können auch mit Thioethern oder Aminen, wie beispielsweise 2-Anilinonaphthalin (PBN), 1-Anilinonaphthalin (PAN) oder 1,4-Dianilinobenzol kombiniert werden. Natürlich können auch marktübliche Substanzen eingesetzt werden, die aufgrund ihres chemischen Aufbaus mehrere polymerisationsinhibierende Prinzipien in sich vereinigen, wie z. B. 2,2'-Thiobis-(4-tert.-octylphenol). Bevorzugt kommen Phenothiazin, 2,6-Di-tert.-butyl-4-(4,6-bis(octylthio)-1,3,5-triazin-2-ylaminophenol und 4-Methyl-2,6-di-tert.-butyl-phenol und 4,4`-Methylen-bis-2,6-di-tert.-butylphenol.

Gegenstand der Erfindung ist auch die Verwendung der monomerarme 1 : 1 Monoaddukte aus reaktiven olefinischen Verbindungen und Diisocyanaten in Formulierungen als Lack-, Dichtstoff- oder Klebstoffzusammensetzungen, für die Lackierungen, Verklebungen oder Abdichtungen von Metall-, Kunststoff-, Glas-, Holz-, MDF- oder Ledersubstraten oder sonstigen Untergründen.

Die hier vorliegende Erfindung wird im Weiteren durch Beispiele erläutert aber nicht eingeschränkt.

### Beispiele

| **Einsatzstoffe** | **Produktbeschreibung, Hersteller** |
|---|---|
| IPDI | Isophorondiisocyanat, Evonik Degussa GmbH, Coatings & Additives |
| H12MDI | VESTANAT H12MD1, Methylendicyclohexyldiisocyanat (4,4'-H₁₂MDI), Evonik Degussa GmbH, Coatings & Additives |
| HEA | Hydroxyethylacrylat, Aldrich |
| DBTL | Dibutylzinndilaurat, Urethanisierungskatalysator, Aldrich |
| TBP | 2,4,6-Tri-tert-butylphenol, nicht einbaubarer Inhibitor, Aldrich |
| IRGANOX 1010 | Pentaerythritol-tetrakis (3-(3,5-di-tert-butyl-4-hydroxyphenyl)propionat), nicht einbaubarer Inhibitor, Ciba |
| IRGANOX 1726 | 4,6-Bis(dodecylthiomethyl)-o-cresol, nicht einbaubarer Inhibitor, Ciba |
| IRGANOX 1076 | Octadecyl-3-(3,5-di-tert.-butyl-4-hydroxyphenyl)-propionat, Nicht einbaubarer Inhibitor, Ciba |
| IRGANOX 1098 | N,N'-Hexan-1,6-diylbis(3-(3,5-di-tert-butyl-4-hydroxyphenylpropionamid)), nicht einbaubarer Inhibitor, Ciba |
| IRGANOX 1520L | 4,6-Bis(octylthiomethyl)-o-cresol, nicht einbaubarer Inhibitor, Ciba |
| IRGANOX 1135 | 3,5-Bis (1,1-dimethyl-ethyl)-4-hydroxy Benzenepropansäure, nicht einbaubarer Inhibitor, Ciba |
| IRGANOX 565 | 2,6-Di-tert-butyl-4-(4,6-bis(ocylthio)-1,3,5-triazin-2-ylamino) phenol, nicht einbaubarer Inhibitor, Ciba |
| BHT | 4-Methyl-2,6-di-tert.-butylphenol, nicht einbaubarer Inhibitor, Ciba |
| Phenothiazin | Nicht einbaubarer Inhibitor, Aldrich |
| DBHBA | 2,6-Di-tert-butyl-4-hydroxy-benzylalcohol, Aldrich, einbaubarer Inhibitor |

### 1) Allgemeine Reaktions- und Destillationsbedingungen IPDI

Eine intensiv gerührte Mischung aus 555 g (2,5 Mol) IPDI, und 0,05g DBTL, wird mit 2,2 g (0,5 Gew.-%) des jeweiligen Inhibitors (siehe Tabelle 1) und tropfenweise mit 116 g (1 Mol) Hydroxyethylacrylat versetzt, wobei trockene Luft über die Lösung geleitet wird. Nach Beendigung der Zugabe wird bei 80 °C so lange weitergerührt, bis ein vollständiger Umsatz der Alkoholkomponente Hydroxyethylacrylat erfolgt ist (In der Regel 2 - 4 h). Auch während dieser Reaktionszeit wird trockene Luft übergeleitet. Im Anschluss wird der Ansatz mit trockener Luft gesättigt und das nicht umgesetzte Diisocyanat mittels Kurzwegdestillation (KDL 4, UIC GmbH, Alzenau-Hörstein) mit 200 g/h bei 150 °C und 2 mbar abgetrennt, wobei ein steter Zustrom an trockener Luft im Gegenstrom durch die Apparatur geleitet wird.

Die vom Rückstand (Reaktionsprodukt) ermittelten chemischen und physikalischen Kenndaten können Tabelle 1 entnommen werden.

**Tabelle 1:**

| Nr. | Diisocyanat | Inhibitor 0,5% | NCO_{gef.} [%] | Monomergehalt [%] |
|---|---|---|---|---|
| 1* | IPDI | - | | Vergelt |
| 2* | IPDI | TBP | | Vergelt |
| 3* | IPDI | IRGANOX 1010 | | Vergelt |
| 4* | IPDI | IRGANOX 1726 | | Vergelt |
| 5* | IPDI | IRGANOX 1076 | | Vergelt |
| 6* | IPDI | IRGANOX 1098 | | Vergelt |
| 7* | IPDI | IRGANOX 1520L | | Vergelt |
| 8* | IPDI | IRGANOX 1135 | | Vergelt |
| 9* | IPDI | IRGANOX 565 | | Vergelt |
| 10* | IPDI | BHT | | Vergelt |
| 11* | IPDI | Phenothiazin | | Vergelt |
| 12 | IPDI | DBHBA | 10,9 | 0,3 |

| | | | | |
|---|---|---|---|---|
| *nicht erfindungsgemäße Vergleichsversuche | | | | |

Alle Versuche ohne einbaubaren Inhibitor sind während der Kurzwegdestillation vergelt (polymerisiert). Diese vergelten Produkte lassen sich nicht mehr vollständig lösen, daher wurde auch kein NCO-Gehalt bestimmt. Allein Versuch 12 ist nicht vergelt, zeigt einen monomeren IPDI-Gehalt von 0,3 %, einen Gehalt an Diaddukt von 0,8 % und eine Viskosität von 17 Pas (RT).

### 2) Allgemeine Reaktions- und Destillationsbedingungen H12MDI, erfindungsgemäß

Eine intensiv gerührte Mischung aus 655 g (2,5 Mol) H12MDI, 0,45g Phenothiazin und 0,05g DBTL, wird mit 2,2 g DBHBA und tropfenweise mit 116 g (1 Mol) Hydroxyethylacrylat versetzt, wobei trockene Luft über die Lösung geleitet wird. Nach Beendigung der Zugabe wird bei 80 °C 4 h weitergerührt, so dass ein vollständiger Umsatz der Alkoholkomponente erfolgt ist. Auch während dieser Reaktionszeit wird trockene Luft übergeleitet. Im Anschluss wird der Ansatz mit trockener Luft gesättigt und das nicht umgesetzte Diisocyanat mittels Kurzwegdestillation (KDL 4, UIC GmbH, Alzenau-Hörstein) mit 200 g/h bei 200 °C und 2 mbar abgetrennt, wobei ein steter Zustrom an trockener Luft im Gegenstrom durch die Apparatur geleitet wird.

Als Rückstand bleibt ein nicht geliertes, fast farbloses Produkt mit einer NCO-Zahl von 9,5%, einem Monomergehalt von 0,9 Gew.-% und einer Viskosität von 31 Pas (RT) übrig.

### 3a) Beispiel in Anlehnung an EP 1179555 mit verringertem IPDI Überschuß ohne DBHBA, nicht erfindungsgemäß

Eine intensiv gerührte Mischung aus 2,5 Mol Isophorondiisocyanat, 0,1 % Phenothiazin, 0,1 % 2,6-Di-tert.-butyl-4-(4,6-bis(octylthio)-1,3,5-triazin-2-ylaminophenol (IRGANOX 565) und 0,1 % 4,4'-Methylen-bis-2,6-di-tert.-butylphenol (BHT) wird bei 75 ° C tropfenweise mit 1 Mol Hydroxyethylacrylat versetzt. Nach Beendigung der Zugabe wird bei 90 °C so lange weitergerührt, bis ein vollständiger Umsatz der Alkoholkomponente erfolgt ist. Im Anschluss wird der Ansatz mit trockener Luft gesättigt und das nicht umgesetzte Diisocyanat mittels Kurzwegdestillation mit 200 g/h bei 150 °C und 2 mbar abgetrennt, wobei ein steter Zustrom an Luft durch die Apparatur geleitet wird.
Der Rückstand zeigte deutliche Vergelungserscheinungen und es kam zu Ablagerungen im Kurzwegverdampfer.

### 3b) Beispiel in Anlehnung an EP 1179555 mit verringertem IPDI Überschuß mit DBHBA, erfindungsgemäß

Eine intensiv gerührte Mischung aus 2,5 Mol Isophorondiisocyanat, 0,1 % Phenothiazin und 0,2 % DBHBA wird bei 75 °C tropfenweise mit 1 Mol Hydroxyethylacrylat versetzt. Nach Beendigung der Zugabe wird bei 90 °C so lange weitergerührt, bis ein vollständiger Umsatz der Alkoholkomponente erfolgt ist. Im Anschluss wird der Ansatz mit trockener Luft gesättigt und das nicht umgesetzte Diisocyanat mittels Kurzwegdestillation mit 200 g/h bei 150 °C und 2 mbar abgetrennt, wobei ein steter Zustrom an Luft durch die Apparatur geleitet wird.
Der Rückstand zeigte keinerlei Vergelungserscheinungen, auch der Kurzwegverdampfer zeigte keine Ablagerungen. Die NCO-Zahl betrug 10,8 %, der Monomergehalt 0,4 %, der Gehalt an Diaddukt 0,5 % und die Viskosität 16 Pas.

## Patentansprüche

1. Monomerarme 1 : 1 Monoaddukte mit einem Gehalt an freiem Diisocyanat von unter 5 Gew.-%, erhalten aus den Ausgangsverbindungen
A) mindestens einem aliphatischen, cycloaliphatischen und/oder araliphatischen Diisocyanat in einer Menge von 1 - 20 mol,
und
B) 1 mol mindestens einer reaktiven olefinischen Verbindung mit einer OH-Gruppe,
wobei das nicht umgesetzte Diisocyanat durch eine Kurzwegdestillation vom Reaktionsprodukt abgetrennt wird,
**dadurch gekennzeichnet,**
**dass** die Kurzwegdestillation in Gegenwart
C) mindestens eines Inhibitors, welcher über mindestens eine gegenüber NCO-Gruppen reaktive funktionelle Gruppe verfügt und die funktionelle Gruppe des Inhibitors C) an einem aliphatischen oder cycloaliphatischen Kohlenwasserstoffrest gebunden ist, erfolgt, wobei die Menge des Inhibitors zwischen 0,1 - 3 Gew.-% beträgt, bezogen auf das Gewicht aus der Summe von einem Mol Diisocyanat A) und einem Mol einer reaktiven olefinischen Verbindung B), entspricht einem NCO/OH von 2 : 1,
und wobei der Inhibitor vor oder während oder nach der Umsetzung von A) mit B) zugegeben werden kann und der Inhibitor zu 0,1 - 99 Gew.%
1. in freier Form vorliegt,
und/oder
2. an der Komponente A) angebunden vorliegt
und/oder
3. an dem Reaktionsprodukt von A) mit B) angebunden vorliegt,
und wobei während des Destillationsprozesses oder des gesamten Prozesses mindestens ein Inhibitorgas durch die Apparaturen geleitet wird.

2. Monomerarme 1 : 1 Monoaddukte nach Anspruch 1,
**dadurch gekennzeichnet,**
**dass** 1 - 4,9 mol, bevorzugt 1,5 - 4 mol Diisocyanat A) eingesetzt werden.

3. Monomerarme 1 : 1 Monoaddukte nach mindestens einem der vorherigen Ansprüche,
**dadurch gekennzeichnet,**
**dass** die Umsetzung der Komponenten A) und C) und anschließend B), oder A) und B) bei Temperaturen von 40 - 120 °C, bevorzugt 40 - 80 °C, erfolgt.

4. Monomerarme 1 : 1 Monoaddukte nach mindestens einem der vorherigen Ansprüche,
**dadurch gekennzeichnet,**
**dass** die Kurzwegdestillation bei 80 - 220 °C, bevorzugt bei 130 -200 °C, und einem Druck von 0,1 bis 10 mbar, bevorzugt 0,5 - 5 mbar, erfolgt, bevorzugt im Dünnschichtverdampfer oder Fallfilmverdampfer.

5. Monomerarme 1 : 1 Monoaddukte nach mindestens einem der vorherigen Ansprüche, mit einem Gehalt an Diaddukten zwischen 0,1 und 15 Gew.-% im Endprodukt, bevorzugt zwischen 0,1 - 5 %, besonders bevorzugt zwischen 0,1 - 1 %.

6. Monomerarme 1 : 1 Monoaddukte nach mindestens einem der vorherigen Ansprüche,
**dadurch gekennzeichnet,**
**dass** Inhibitorgase ausgewählt aus Luft, Stickstoffmonoxid, Sauerstoff allein oder in Mischungen, oder Mischungen, die neben Luft, Sauerstoff oder Stickstoffmonoxid einen zusätzlichen Anteil von 1 - 90 Vol-% and Kohlendioxid, Stickstoff oder Edelgasen oder Mischungen dieser Gase eingesetzt werden.

7. Monomerarme 1 : 1 Monoaddukte nach mindestens einem der vorherigen Ansprüche,
**dadurch gekennzeichnet,**
**dass** als Diisocyanat A) 1,2-Ethylendiisocyanat, 1,4-Tetramethylendiisocyanat, 1,6-Hexamethylendiisocyanat (HDI), 2,2,4-Trimethyl-1,6-hexamethylendiisocyanat (TMDI), 2,4,4-Trimethyl-1,6-hexamethylendiisocyanat (TMDI)1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3-diisocyanat, Cyclohexan-1,4-diisocyanat, 3-Isocyanatomethyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methanol-naphthalin-2,5-ylendimethylendiisocyanat, Decahydro-8-methyl-(1,4-methanol-naphthalin-3,5-ylendimethylendiisocyanat, Hexahydro-4,7-methano-indan-1,5- ylendimethylendiisocyanat, Hexahydro-4,7-methano-indan-2,5- ylendimethylendiisocyanat, Hexahydro-4,7-methano-indan-1,6-ylendimethylendiisocyanat, Hexahydro-4,7-methano-indan-2,5-ylendimethylendiisocyanat, Hexahydro-4,7-methanoindan-1,5-ylendiisocyanat, Hexahydro-4,7-methanoindan-2,5-ylendiisocyanat, Hexahydro-4,7-methanoindan-1,6-ylendiisocyanat, Hexahydro-4,7-methanoindan-2,6-ylendiisocyanat, , 2,4- Hexahydrotoluylendiisocyanat, 2,6-Hexahydrotoluylendiisocyanat, 4,4'-Methylendicyclohexyldiisocyanat (4,4'-H₁₂MDI), 2,2'-Methylendicyclohexyldiisocyanat (2,2'-H₁₂MDI), 2,4-Methylendicyclohexyldiisocyanat (2,4-H₁₂MDI) oder auch Mischungen, 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzol, 1,4-Diisocyanatomethyl-2,3,5,6-tetramethylbenzol, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan sowie beliebige Gemische dieser Verbindungen, bevorzugt IPDI, HDI und/oder H₁₂MDI, eingesetzt werden.

8. Monomerarme 1 : 1 Monoaddukte nach mindestens einem der vorherigen Ansprüche,
**dadurch gekennzeichnet,**
**dass** als Komponente B) Hydroxyethylacrylat, Hydroxypropylacrylat, Hydroxybutylacrylat und Hydroxyethylmethacrylat, Hydroxypropylmethacrylat, Hydroxybutylmethacrylat, Glycerindiacrylat, Pentaerythroltriacrylat, Trimethylolpropandiacrylat, Glycerindimethacrylat, Pentaerythroltrimethacrylat und Trimethylolpropandimethacrylat sowie Hydroxyethylvinylether, Hydroxypropylvinylether, Hydroxybutylvinylether Hydroxypentylvinylether und Hydroxyhexylvinylether, allein oder in Mischungen, bevorzugt Hydroxyethylacrylat, eingesetzt werden.

9. Monomerarme 1 : 1 Monoaddukte nach mindestens einem der vorherigen Ansprüche,
**dadurch gekennzeichnet,**
**dass** als Komponente C) 3,5-Di-tert-butyl-4-hydroxybenzylalkohol, 3-(3,5-Di-tert-butyl-4-hydroxyphenyl)propanol, 4-(3,5-Di-tert-butyl-4-hydroxyphenyl)butanol, 5-(3,5-Di-tert-butyl-4-hydroxyphenyl)pentanol, 6-(3,5-Di-tert-butyl-4-hydroxyphenyl)hexanol, 3-tert-butyl-5-methyl-4-hydroxybenzylalkohol, 3-(3,5-Di-tert-butyl-4-hydroxyphenyl)propanol, 4-(3-tert-butyl-5-methyl-4-hydroxyphenyl)butanol, 5-(3-tert-butyl-5-methyl-4-hydroxyphenyl)pentanol, 6-(3-tert-butyl-5-methyl-4-hydroxyphenyl)hexanol, 4-(3,5-Dimethyl-4-hydroxyphenyl)butanol, 5-(3,5-Dimethyl-4-hydroxyphenyl)pentanol, 6-(3,5-Dimethyl-4-hydroxyphenyl)hexanol, allein oder in Mischungen, bevorzugt 3,5-Di-tert-butyl-4-hydroxybenzylalkohol, eingesetzt werden.

10. Monomerarme 1 : 1 Monoaddukte nach mindestens einem der vorherigen Ansprüche,
**dadurch gekennzeichnet,**
**dass** weitere Polymerisationsinhibitoren (Antioxidantien) anwesend sind, bevorzugt Phenothiazin und/oder 4-Methyl-2,6-di-tert.-butylphenol (BHT).

11. Monomerarme 1 : 1 Monoaddukte nach mindestens einem der vorherigen Ansprüche, mit einem Gehalt an freiem Diisocyanat von unter 1,0 Gew.-%.

12. Verfahren zur Herstellung monomerarmer 1 : 1 Monoaddukte mit einem Gehalt an freiem Diisocyanat von unter 5 Gew.-% aus den Ausgangsverbindungen
A) mindestens einem aliphatischen, cycloaliphatischen und/oder araliphatischen Diisocyanat in einer Menge von 1 - 20 mol,
und
B) 1 mol mindestens einer reaktiven olefinischen Verbindung mit mindestens einer OH-Gruppe,
erhalten durch Umsetzung in einem Temperaturbereich von 40 - 120 °C und wobei anschließend das nicht umgesetzte Diisocyanat durch eine Kurzwegdestillation bei 80 - 220 °C/0,1 - 10 mbar vom Reaktionsprodukt abgetrennt wird,
**dadurch gekennzeichnet,**
**dass** die Kurzwegdestillation in Gegenwart
C) mindestens eines Inhibitors, welcher über mindestens eine gegenüber NCO-Gruppen reaktive funktionelle Gruppe verfügt, erfolgt, wobei die Menge des Inhibitors zwischen 0,1 - 3 Gew.-% beträgt, bezogen auf das Gewicht aus der Summe von einem Mol Diisocyanat A) und einem Mol einer reaktiven olefinischen Verbindung B), entspricht einem Verhältnis NCO/OH von 2 : 1, wobei der Inhibitor vor oder während oder nach der Umsetzung von A) mit B) zugegeben wird, und wobei während des Destillationsprozesses oder des gesamten Prozesses mindestens ein Inhibitorgas durch die Apparaturen geleitet wird.

13. Verwendung der monomerarmen 1 : 1 Monoaddukte nach mindestens einem der Ansprüche 1 bis 12 in Formulierungen als Lackzusammensetzungen, Dichtstoffzusammensetzungen oder Klebstoffzusammensetzungen, für die Lackierungen, Verklebungen oder Abdichtungen von Metallsubstraten, Kunststoffsubstraten, Glassubstraten, Holzsubstraten, MDF-Substraten oder Ledersubstraten oder sonstigen Untergründen.

## Claims

1. Low-monomer-content 1:1 monoadducts having a free diisocyanate content of less than 5% by weight, obtained from, as starting compounds,
A) at least one aliphatic, cycloaliphatic and/or araliphatic diisocyanate in an amount of 1 - 20 mol,
and
B) 1 mol of at least one reactive olefinic compound having an OH group,
the unreacted diisocyanate being separated off by short-path distillation from the reaction product, **characterized**
**in that** the short-path distillation takes place in the presence
C) of at least one inhibitor which possesses at least one functional group reactive toward NCO groups and the functional group of the inhibitor C) is attached to an aliphatic or cycloaliphatic hydrocarbon radical, the amount of the inhibitor being between 0.1% - 3% by weight, based on the weight of the sum of one mole of diisocyanate A) and one mole of a reactive olefinic compound B) corresponding to an NCO/OH of 2:1,
it being possible for the inhibitor to be added before or during or after the reaction of A) with B), and the inhibitor, to an extent of 0.1%-99% by weight,
1. being present in free form,
and/or
2. being attached to the component A)
and/or
3. being attached to the reaction product of A) with B),
and where, during the distillation process or the entire process, at least one inhibitor gas is passed through the apparatus.

2. Low-monomer-content 1:1 monoadducts according to Claim 1,
**characterized**
**in that** 1 - 4.9 mol, preferably 1.5 - 4 mol, of diisocyanate A) are used.

3. Low-monomer-content 1:1 monoadducts according to at least one of the preceding claims,
**characterized**
**in that** the reaction of components A) and C) and subsequently B), or A) and B), takes place at temperatures of 40 - 120°C, preferably 40 - 80°C.

4. Low-monomer-content 1:1 monoadducts according to at least one of the preceding claims,
**characterized**
**in that** the short-path distillation takes place at 80 - 220°C, preferably at 130 - 200°C, and at a pressure of 0.1 to 10 mbar, preferably 0.5 - 5 mbar, preferably in a thin-film evaporator or falling-film evaporator.

5. Low-monomer-content 1:1 monoadducts according to at least one of the preceding claims, having a diadducts content of between 0.1% and 15% by weight in the end product, preferably between 0.1% - 5%, more preferably between 0.1% - 1%.

6. Low-monomer-content 1:1 monoadducts according to at least one of the preceding claims,
**characterized**
**in that** inhibitor gases selected from air, nitrogen monoxide, oxygen alone or in mixtures, or mixtures which further to air, oxygen or nitrogen monoxide, contain an additional fraction of 1% - 90% by volume of carbon dioxide, nitrogen or noble gases or mixtures of these gases, are used.

7. Low-monomer-content 1:1 monoadducts according to at least one of the preceding claims,
**characterized**
**in that** use is made as diisocyanate A) of 1,2-ethylene diisocyanate, 1,4-tetramethylene diisocyanate, 1,6-hexamethylene diisocyanate (HDI), 2,2,4-trimethyl-1,6-hexamethylene diisocyanate (TMDI), 2,4,4-trimethyl-1,6-hexamethylene diisocynate (TMDI), 1,9-diisocyanato-5-methylnonane, 1,8-diisocyanato-2,4-dimethyloctane, 1,12-dodecane diisocyanate, **ω,ω**'-diisocyanatodipropyl ether, cyclobutene 1,3-diisocyanate, cyclohexane 1,3-diisocyanate, cyclohexane 1,4-diisocyanate, 3-isocyanatomethyl-3,5,5-trimethylcyclohexyl isocyanate (isophorone diisocyanate, IPDI), 1,4-diisocyanatomethyl-2,3,5,6-tetramethylcyclohexane, decahydro-8-methyl-(1,4-methanol-naphthalen-2,5-ylenedimethylene) diisocyanate, decahydro-8-methyl-(1,4-methanol-naphthalen-3,5-ylenedimethylene) diisocyanate, hexahydro-4,7-methanoindan-1,5-ylenedimethylene diisocyanate, hexahydro-4,7-methanoindan-2,5-ylenedimethylene diisocyanate, hexa hexahydro-4,7-methanoindan-2,5-ylenedimethylene diisocyanate, hexahydro-4,7-methanoindan-1,5-ylene diisocyanate, hexahydro-4,7-methanoindan-2,5-ylene diisocyanate, hexahydro-4,7-methanoindan-1,6-ylene diisocyanate, hexahydro-4,7-methanoindan-2,6-ylene diisocyanate, 2,4-hexahydrotolylene diisocyanate, 2,6-hexahydrotolylene diisocyanate, 4,4'-methylenedi-cyclohexyl diisocyanate (4,4'-H₁₂MDI), 2,2'-methylenedi-cyclohexyl diisocyanate (2,2'-H₁₂MDI), 2,4-methylenedi-cyclohexyl diisocyanate (2,4-H₁₂MDI) or else mixtures, 4,4'-diisocyanato-3,3',5,5'-tetramethyldicyclohexyl-methane, 4,4'-diisocyanato-2,2',3,3',5,5',6,6'-octamethyldicyclohexylmethane, **ω,ω'**-diisocyanato-1,4-diethylbenzene, 1,4-diisocyanatomethyl-2,3,5,6-tetramethylbenzene, 2-methyl-1,5-diisocyanatopentane (MPDI), 2-ethyl-1,4-diisocyanatobutane, 1,10-diisocyanatodecane, 1,5-diisocyanatohexane, 1,3-diisocyanatomethylcyclohexane, 1,4-diisocyanatomethylcyclohexane, and any desired mixtures of these compounds, preferably IPDI, HDI and/or H₁₂MDI.

8. Low-monomer-content 1:1 monoadducts according to at least one of the preceding claims,
**characterized**
**in that** use is made as component B) of hydroxyethyl acrylate, hydroxypropyl acrylate, hydroxybutyl acrylate, and hydroxyethyl methacrylate, hydroxypropyl methacrylate, hydroxylbutyl methacrylate, glycerol diacrylate, pentaerythritol triacrylate, trimethylolpropane diacrylate, glycerol dimethacrylate, pentaerythritol trimethacrylate, and trimethylolpropane dimethacrylate, and also hydroxyethyl vinyl ether, hydroxypropyl vinyl ether, hydroxybutyl vinyl ether, hydroxypentyl vinyl ether, and hydroxyhexyl vinyl ether, alone or in mixtures, preferably hydroxyethyl acrylate.

9. Low-monomer-content 1:1 monoadducts according to at least one of the preceding claims,
**characterized**
**in that** use is made as component C) of 3,5-di-tert-butyl-4-hydroxybenzyl alcohol, 3-(3,5-di-tert-butyl-4-hydroxyphenyl)propanol, 4-(3,5-di-tert-butyl-4-hydroxyphenyl)butanol, 5-(3,5-di-tert-butyl-4-hydroxyphenyl)-pentanol, 6-(3,5-di-tert-butyl-4-hydroxyphenyl)hexanol, 3-tert-butyl-5-methyl-4-hydroxybenzyl alcohol, 4-(3-tert-butyl-5-methyl-4-hydroxyphenyl)butanol, 5-(3-tert-butyl-5-methyl-4-hydroxyphenyl)pentanol, 6-(3-tert-butyl-5-methyl-4-hydroxyphenyl)hexanol, 4-(3,5-dimethyl-4-hydroxyphenyl)butanol, 5-(3,5-dimethyl-4-hydroxyphenyl)pentanol, 6-(3,5-dimethyl-4-hydroxyphenyl)hexanol, alone or in mixtures, preferably 3,5-di-tert-butyl-4-hydroxybenzyl alcohol.

10. Low-monomer-content 1:1 monoadducts according to at least one of the preceding claims,
**characterized**
**in that** further polymerization inhibitors (antioxidants) are present, preferably phenothiazine and/or 4-methyl-2,6-di-tert-butylphenol (BHT).

11. Low-monomer-content 1:1 monoadducts according to at least one of the preceding claims, having a free diisocyanate content of less than 1.0% by weight.

12. Process for preparing low-monomer-content 1:1 monoadducts having a free diisocyanate content of less than 5% by weight from, as starting compounds,
A) at least one aliphatic, cycloaliphatic and/or araliphatic diisocyanate in an amount of 1 - 20 mol,
and
B) 1 mol of at least one reactive olefinic compound having at least one OH group,
obtained by reaction in a temperature range of 40
- 120°C, the unreacted diisocyanate being separated off subsequently by a short-path distillation at 80 - 220°C/0.1 - 10 mbar from the reaction product,
**characterized**
**in that** the short-path distillation takes place in the presence
C) of at least one inhibitor which possesses at least one functional group reactive toward NCO groups, the amount of the inhibitor being between 0.1% - 3% by weight, based on the weight of the sum of one mole of diisocyanate A) and one mole of a reactive olefinic compound B) corresponding to an NCO/OH ratio of 2:1,
the inhibitor being added before or during or after the reaction of A) with B), and where during the distillation process or the entire process, at least one inhibitor gas is passed through the apparatus.

13. Use of low-monomer-content 1:1 monoadducts according to at least one of Claims 1 to 12 in formulations as coating compositions, sealant compositions or adhesive compositions, for the coating, bonding or sealing of metal substrates, plastics substrates, glass substrates, wood substrates, MDF substrates or leather substrates, or other substrates.

## Revendications

1. Monoadduits 1 : 1 pauvres en monomères ayant une teneur en diisocyanate libre de moins de 5 % en poids, obtenus à partir des composés de départ
A) au moins un diisocyanate aliphatique, cycloaliphatique et/ou araliphatique en une quantité de 1 - 20 moles,
et
B) 1 mole d'au moins un composé oléfinique réactif comportant un groupe OH,
ledit diisocyanate n'ayant pas réagi étant séparé par une distillation à court trajet du produit de réaction, **caractérisé en ce que**
la distillation à court trajet s'effectue en présence
C) d'au moins un inhibiteur qui est doté d'au moins un groupe fonctionnel réactif vis-à-vis de groupes NCO et le groupe fonctionnel de l'inhibiteur C) est lié à un radical hydrocarboné aliphatique ou cycloaliphatique, la quantité de l'inhibiteur étant comprise entre 0,1 et 3 % en poids, par rapport au poids de la somme d'une mole de diisocyanate A) et d'une mole d'un composé oléfinique réactif B), correspondant à un rapport NCO/OH de 2 : 1,
et l'inhibiteur pouvant être ajouté avant ou pendant ou après la réaction de A) avec B) et l'inhibiteur à raison de 0,1 - 99 % en poids
1. se trouvant sous forme libre,
et/ou
2. se trouvant lié au composant A)
et/ou
3. se trouvant lié au produit de réaction de A) avec B),
et en faisant passer dans les appareils pendant le processus de distillation ou le processus dans son ensemble au moins un gaz inhibiteur.

2. Monoadduits 1 : 1 pauvres en monomères selon la revendication 1,
**caractérisés**
**en ce qu'**on utilise 1 - 4,9 moles, de préférence 1, 5 - 4 moles de diisocyanate A).

3. Monoadduits 1 : 1 pauvres en monomères selon au moins l'une quelconque des revendications précédentes,
**caractérisés en ce que**
la réaction des composants A) et C) et ensuite B), ou A) et B) s'effectue à des températures de 40 - 120 °C, de préférence de 40 - 80 °C.

4. Monoadduits 1 : 1 pauvres en monomères selon au moins l'une quelconque des revendications précédentes,
**caractérisés en ce que**
la distillation à court trajet s'effectue à 80 - 220 °C, de préférence à 130 - 200 °C, et sous une pression de 0,1 à 10 mbars, de préférence de 0,5 - 5 mbars, de préférence dans un évaporateur à couche mince ou un évaporateur à film descendant.

5. Monoadduits 1 : 1 pauvres en monomères selon au moins l'une quelconque des revendications précédentes, ayant une teneur du produit final en diadduits comprise entre 0,1 et 15 % en poids, de préférence entre 0,1 et 5 %, de façon particulièrement préférée entre 0,1 et 1 %.

6. Monoadduits 1 : 1 pauvres en monomères selon au moins l'une quelconque des revendications précédentes,
**caractérisés**
**en ce qu'**on utilise des gaz inhibiteurs choisis parmi l'air, le monoxyde d'azote, l'oxygène seuls ou en mélanges, ou des mélanges qui, outre l'air, l'oxygène ou le monoxyde d'azote, présentent une teneur supplémentaire de 1 - 90 % en volume en dioxyde de carbone, azote ou gaz rares ou mélanges de ces gaz.

7. Monoadduits 1 : 1 pauvres en monomères selon au moins l'une quelconque des revendications précédentes,
**caractérisés**
**en ce qu'**on utilise comme diisocyanate A) le 1,2-éthylènediisocyanate, le 1,4-tétraméthylènediisocyanate, le 1,6-hexaméthylènediisocyanate (HDI), le 2,2,4-triméthyl-1,6-hexaméthylènediisocyanate (TMDI), le 2,4,4-triméthyl-1,6-hexaméthylènediisocyanate (TMDI), le 1,9-diisocyanato-5-méthylnonane, le 1,8-diisocyanato-2,4-diméthyloctane, le 1,12-dodécanediisocyanate, l**'ω,ω'**-diisocyanato-dipropyléther, le cyclobutène-1,3-diisocyanate, le cyclohexane-1,3-diisocyanate, le cyclohexane-1,4-diisocyanate, le 3-isocyanatométhyl-3,5,5-triméthyl-cyclohexylisocyanate (isophorone-diisocyanate, IPDI), le 1,4-diisocyanatométhyl-2,3,5,6-tétraméthyl-cyclohexane, le décahydro-8-méthyl-(1,4-méthanol-naphtalène-2,5-ylènediméthylènediisocyanate, le décahydro-8-méthyl-(1,4-méthanol-naphtalène-3,5-ylène-diméthylène)diisocyanate, l'hexahydro-4,7-méthano-indan-1,5-ylènediméthylènediisocyanate, l'hexahydro-4,7-méthano-indan-1,6-ylènediméthylènediisocyanate, l'hexahydro-4,7-méthano-indan-2,5-ylène-diméthylènediisocyanate, l'hexahydro-4,7-méthano-indan-1,5-ylènediisocyanate, l'hexahydro-4,7-méthano-indan-2,5-ylènediisocyanate, l'hexahydro-4,7-méthano-indan-1,6-ylènediisocyanate, l'hexahydro-4,7-méthano-indan-2,6-ylènediisocyanate, le 2,4-hexahydrotoluylène-diisocyanate, le 2,6-hexahydrotoluylène-diisocyanate,
le 4,4'-méthylènedicyclohexyldiisocyanate (4,4'-H₁₂MDI), le 2,2'-méthylènedicyclohexyldiisocyanate (2,2'-H₁₂MDI), le 2,4-méthylènedicyclohexyldiisocyanate (2,4-H₁₂MDI) ou bien des mélanges, le 4,4'-diisocyanato-3,3',5,5'-tétraméthyldicyclohexylméthane, le 4,4'-diisocyanato-2,2',3,3',5,5',6,6'-octaméthyldicyclohexylméthane, l**'ω,ω'**-diisocyanato-1,4-diéthylbenzène, le 1,4-diisocyanatométhyl-2,3,5,6-tétraméthylbenzène, le 2-méthyl-1,5-diisocyanatopentane (MPDI), le 2-éthyl-1,4-diisocyanatobutane, le 1,10-diisocyanatodécane, le 1,5-diisocyanatohexane, le 1,3-diisocyanatométhylcyclohexane, le 1,4-diisocyanatométhylcyclohexane ainsi que des mélanges quelconques de ces composés, de préférence l'IPDI, le HDI et/ou le H₁₂MDI.

8. Monoadduits 1 : 1 pauvres en monomères selon au moins l'une quelconque des revendications précédentes,
**caractérisés**
**en ce qu'**on utilise comme composant B) l'acrylate d'hydroxyéthyle, l'acrylate d'hydroxypropyle, l'acrylate d'hydroxybutyle et le méthacrylate d'hydroxyéthyle, le méthacrylate d'hydroxypropyle, le méthacrylate d'hydroxybutyle, le diacrylate de glycérol, le triacrylate de pentaérythritol, le diacrylate de triméthylolpropane, le diméthacrylate de glycérol, le triméthacrylate de pentaérythritol et le diméthacrylate de triméthylolpropane ainsi que l'éther hdroxyéthylvinylique, l'éther hydroxypropylvinylique, l'éther hydroxybutylvinylique, l'éther hydroxypentylvinylique et l'éther hydroxyhexylvinylique, seuls ou en mélanges, de préférence l'acrylate d'hydroxyéthyle.

9. Monoadduits 1 : 1 pauvres en monomères selon au moins l'une quelconque des revendications précédentes,
**caractérisés**
**en ce qu'**on utilise comme composant C) l'alcool 3,5-di-tert-butyl-4-hydroxybenzylique, le 3-(3,5-di-tert-butyl-4-hydroxyphényl)propanol, le 4-(3,5-di-tert-butyl-4-hydroxyphényl)butanol, le 5-(3,5-di-tert-butyl-4-hydroxyphényl)pentanol, le 6-(3,5-di-tert-butyl-4-hydroxyphényl)hexanol, l'alcool 3-tert-butyl-5-méthyl-4-hydroxybenzylique, le 4-(3-tert-butyl-5-méthyl-4-hydroxyphényl)butanol, le 5-(3-tert-butyl-5-méthyl-4-hydroxyphényl)pentanol, le 6-(3-tert-butyl-5-méthyl-4-hydroxyphényl)hexanol, le 4-(3,5-diméthyl-4-hydroxyphényl)butanol, le 5-(3,5-diméthyl-4-hydroxyphényl)-pentanol, le 6-(3,5-diméthyl-4-hydroxyphényl)hexanol, seuls ou en mélanges, de préférence l'alcool 3,5-di-tert-butyl-4-hydroxybenzylique,

10. Monoadduits 1 : 1 pauvres en monomères selon au moins l'une quelconque des revendications précédentes,
**caractérisés en ce que**
d'autres inhibiteurs de polymérisation (antioxydants) sont présents, de préférence la phénothiazine et/ou le 4-méthyl-2,6-di-tert-butylphénol (BHT).

11. Monoadduits 1 : 1 pauvres en monomères selon au moins l'une quelconque des revendications précédentes, ayant une teneur de moins de 1,0 % en poids en diisocyanate libre.

12. Procédé pour la préparation de monoadduits 1 : 1 pauvres en monomères, ayant une teneur en diisocyanate libre de moins de 5 % en poids, à partir des composés de départ
A) au moins un diisocyanate aliphatique, cycloaliphatique et/ou araliphatique en une quantité de 1 - 20 % en moles,
et
B) 1 mole d'au moins un composé oléfinique réactif comportant au moins un groupe OH,
obtenu par réaction dans une plage de température de 40 - 120 °C et ensuite le diisocyanate n'ayant pas réagi étant séparé du produit de réaction par une distillation à court trajet à 80 - 220 °C/0,1 - 10 mbars,
**caractérisé en ce que**
la distillation à court trajet s'effectue en présence
C) d'au moins un inhibiteur qui est doté d'au moins un groupe fonctionnel réactif vis-à-vis de groupes NCO, la quantité de l'inhibiteur étant comprise entre 0,1 et 3 % en poids, par rapport au poids de la somme d'une mole de diisocyanate A) et d'une mole d'un composé oléfinique réactif B), correspondant à un rapport NCO/OH de 2 : 1, l'inhibiteur étant ajouté avant ou pendant ou après la réaction de A) avec B), et en faisant passer dans les appareils pendant le processus de distillation ou le processus dans son ensemble au moins un gaz inhibiteur.

13. Utilisation des monoadduits 1 : 1 pauvres en monomères selon au moins l'une quelconque des revendications 1 à 12, dans des formules en tant que compositions de peintures, compositions de matières d'étanchéité ou compositions d'adhésifs, pour les revêtements de peinture, collages ou étanchéification de supports métalliques, supports en matière plastique, supports en verre, supports en bois, supports MDF ou supports en cuir ou autres supports.
